# EUROPEAN PATENT APPLICATION

(11) **EP 4 800 869 A2**
(43) Date of publication of application: **02.09.2026**
(21) Application number: 25222420.9
(22) Date of filing: 10.12.2025
(51) Int. Cl.: H02J 3/32, H02J 3/36, H02J 3/48

(54) **ENHANCED HIGH-VOLTAGE DIRECT CURRENT VOLTAGE MANAGEMENT VIA ENERGY ISLAND GENERATION CONTROL**

(30) Priority: 16.01.2025 US 202519025182
(71) Applicant: GE Vernova Technology GmbH, 5400 Baden (CH)
(72) Inventor: BARKER, Carl, Greenvillie, 29615 (US); ACHILLES, Alfredo Sebastian, Greenvillle, 29615 (US)
(74) Representative: Openshaw & Co.

(57) **Abstract**

Devices, systems, and methods for controlling active energy provided by an energy island to an synchronous alternating current (AC) grid via a high-voltage direct current (HVDC) transmission circuit may include an HVDC transmission circuit connecting an energy island, including wind turbines, solar panels, and energy storage systems, to a synchronous AC grid; and a fast energy controller (FEC), remote from the HVDC transmission circuit, configured to: receive, from the HVDC transmission circuit, an indication of an electrical energy demanded from the synchronous AC grid; determine a difference between a power demanded by the synchronous AC grid and the electrical energy; and based on a comparison of the difference to a deadband range with an upper threshold and a lower threshold, cause the energy island to adjust an amount of active energy provided by the energy storage systems to the synchronous AC grid.

## Description

### TECHNICAL FIELD

This disclosure generally relates to voltage management, and more specifically to high-voltage direct current (HDVC) voltage management.

### BACKGROUND

Energy grids are supplied by a variety of energy sources. A sudden change in the power to be exchanged between an alternating current (AC) grid and a power electronic converter used to interface the AC grid to energy sources causes a change in direct current (DC) voltage. Existing grid management systems compensate the change in DC voltage by using a DC voltage controller to modify the active power exchanged between the AC and DC systems to regulate the DC voltage to a target value or range. However, the existing grid management systems limit the amount of active power that can be rapidly exchanged between the energy sources and the AC grid, and the active power available in response to a change in DC voltage may be insufficient and not provided quickly enough to the AC grid in response to the change in DC voltage.

### SUMMARY

A system for connecting an energy island to an alternating current (AC) grid may include a high-voltage direct current (HVDC) transmission circuit connecting an energy island, including energy island resources, wherein the energy island resources may include one or more energy storage systems and at least one of one or more wind turbines and one or more solar panels, to a synchronous AC grid; and a fast energy controller (FEC), remote from the HVDC transmission circuit, and able to: receive, from the HVDC transmission circuit, an indication of a change in electrical energy being delivered to the synchronous AC grid from the energy island resources; determine a difference between a power being delivered to the synchronous AC grid via the HVDC transmission circuit and the electrical energy; and based on a comparison of the difference to a deadband range with an upper threshold and a lower threshold, cause the energy island to adjust an amount of active energy provided by the one or more energy storage systems to the HVDC transmission circuit to bring the measured difference back within the deadband range.

A fast energy controller (FEC) device for controlling active energy provided by an energy island to an synchronous alternating current (AC) grid via a high-voltage direct current (HVDC) transmission circuit, the FEC device including processing circuitry able to: receive, from the HVDC transmission circuit, an indication of a change in electrical energy being delivered to the synchronous AC grid by energy island resources including one or more energy storage systems and at least one of one or more wind turbines and one or more solar panels; determine a difference between a power being delivered to the synchronous AC grid via the HVDC transmission circuit and the electrical energy; and based on a comparison of the difference to a deadband range with an upper threshold and a lower threshold, cause the energy island to adjust an amount of active energy provided by the one or more energy storage systems to the HVDC transmission circuit to bring the measured difference back within the deadband range.

A method for controlling active energy provided by an energy island to an synchronous alternating current (AC) grid via a high-voltage direct current (HVDC) transmission circuit, the method including: receiving, by processing circuitry of a fast energy controller, from the HVDC transmission circuit, an indication of an electrical energy being delivered to the AC grid by energy island resources including one or more energy storage systems and at least one of one or more wind turbines and one or more solar panels; determining, by the processing circuitry, a difference between a power being delivered to the synchronous AC grid via the HVDC transmission circuit and the electrical energy; and based on a comparison of the difference to a deadband range with an upper threshold and a lower threshold, causing, by the processing circuitry, the energy island to adjust an amount of active energy provided by the one or more energy storage systems to the HVDC transmission circuit to bring the measured difference back within the deadband.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 shows an example system for connecting an energy island to a synchronous alternating current (AC) grid via a high-voltage direct current (HVDC) in accordance with one embodiment of the present disclosure.
FIG. 2 shows a system for how the DC voltage measurement from a HVDC system will be passed to a fast energy controller (FEC) in order to regulate the active power being generated in accordance with one embodiment of the present disclosure.
FIG. 3 shows an example of the energy management system of FIG. 2 in accordance with one embodiment of the present disclosure.
FIG. 4 shows a system for how the DC voltage measurement from an HVDC system will be passed to the FEC as a separate controller in order to regulate the active power being generated in accordance with one embodiment of the present disclosure.
FIG. 5 shows an example of the energy management system of FIG. 4 in accordance with one embodiment of the present disclosure.
FIG. 6 shows an example graph of the DC voltage error used by the FEC of FIG. 2 and FIG. 4 to determine whether to change active power generation levels of the energy island of FIG. 1 in accordance with one embodiment of the present disclosure.
FIG. 7 shows an example of the HVDC transmission circuit of FIG. 2 and FIG. 4 in accordance with one embodiment of the present disclosure.

Certain implementations will now be described more fully below with reference to the accompanying drawings, in which various implementations and/or aspects are shown. However, various aspects may be implemented in many different forms and should not be construed as limited to the implementations set forth herein; rather, these implementations are provided so that this disclosure will be thorough and complete, and will fully convey the scope of the disclosure to those skilled in the art. Like numbers in the figures refer to like elements throughout. Hence, if a feature is used across several drawings, the number used to identify the feature in the drawing where the feature first appeared will be used in later drawings.

### DETAILED DESCRIPTION

High-voltage direct current (HVDC) systems are used to transmit power between power generators and power consumers. For example, the concept of energy islands are increasingly being used for energy generators that supply power to power consumers, often via transmission lines hundreds or even thousands of miles (or kilometers) from the energy generators. The types of energy generators include renewable energy sources, which are variable, asynchronous energy producers.

HVDC systems are commonly used to transmit power between the generation zone and the consumption zone, as an example, from an offshore electrical AC system toward an onshore electrical AC system. Due to the variable nature of these AC systems such as operator order changes, system faults and topology changes, there will always be some variations of the AC voltage phasor angle of each HVDC station and hence instantaneous energy imbalance between the AC and DC side of the HVDC converter. This energy imbalance at an HVDC terminal will lead to energy imbalance between the ends of an HVDC transmission system, and consequently result in an increase or a decrease of DC voltage magnitude, depending on whether there is, respectively, a net energy surplus or deficit. Therefore, in a minimum HVDC system configuration consisting of two HVDC converter stations, there must be at least one station that looks after the regulation of the DC voltage. In a typical point-to-point HVDC link used for evacuating power from offshore wind farms, the offshore HVDC converter is often controlled using a Grid-forming strategy (GFM), meaning fixed voltage magnitude and frequency, while the onshore station is often controlled using the Grid-following (GFL) strategy. GFM control aims to form a synchronizing AC voltage with a constant magnitude and frequency to the asynchronously connected power park modules (PPMs), while the GFL is configured in the DC-voltage control mode to modulate the DC voltage of the HVDC link by modulating the energy transfer between its AC and DC terminals, and hence to maintain a constant energy balance between the ends of the HVDC link.

In any HVDC system there must be at least one station that maintains the DC voltage by adjusting its own DC active power output to compensate for any DC energy imbalance. With a limited amount of energy storage within the MMC VSC the AC power of the DC voltage controlling station must change in sympathy with the DC power. As such, controlling the DC voltage is contradictory to performing SGFM functions that impose different requirements on the AC power exchange with the AC system.

Power systems have been experiencing a significant transition from fossil-based to clean renewables in the past few decades, leading most countries to massively invest in renewable energy sources (RESs). In parallel, several High Voltage Direct Current (HVDC) links have been built to transport the energy efficiently, with more being built and planned. A common application of HVDC transmission is the interconnection of two non-synchronized AC systems or the connection of a (renewable) power generation island to an AC system. Where the HVDC system is used to interconnect two AC systems, it is normal to operate the HVDC link with one station operating in active power control, that is, targeting a dispatched magnitude of active power flow through the HVDC link. The other station is then given the function of regulating the DC transmission voltage to a target value, which means that that station must import or export a magnitude of active power in order to satisfy the demand presented by the power controlling end (neglecting losses) and hence, maintain the HVDC link energy balance. An energy imbalance between the separated AC terminals of the HVDC system, where the energy in does not equal the energy out, resulting in a net gain or loss of energy within the HVDC system, will manifest as a change in the DC voltage magnitude of the HVDC installation.

In an example, an energy island may include multiple power sources, as an example, wind turbines, solar panels, and battery energy storage for storing energy produced by the energy generators. Further, some or all of these renewable energy storage devices will be interfaced to the islanded alternating current (AC) grid via a power electronic converter and this power electronic converter may operate as "grid following" controlled devices. As a "grid following" controlled device, these cannot contribute to creating the islanded AC grid in terms of creating an AC voltage within a controlled range within a defined AC frequency range. To achieve the creation at least some of the power electronic interfaced devices must operate in the so called "grid forming" mode, that is they are able to "form" the grid, creating an AC voltage within a defined range within a defined range of AC frequency. In a grid forming mode, the converter takes energy out of (or put energy back into) the HVDC circuit. As a result, the HVDC circuit would adjust to the AC grid demand and then would have to notify the energy island to adjust accordingly. The present disclosure avoids this issue by use of the FEC and reliance on the voltage measurement from the HVDC as explained herein.

It is desirable to have a "grid forming" controller also operating at the synchronous AC grid side of the HVDC link, that is, the side of the link that is delivering the power from the energy island into the synchronous AC grid. A sudden change in the power to be exchanged between the HVDC converter and the synchronous AC grid will result in a change in the DC voltage.

In existing HVDC systems, the change in DC voltage would be compensated for by one end of the HVDC link which is designated as being in "DC voltage controller", where the "DC voltage controller" will act to modify the active power that is being exchanged between the AC and DC system in order to regulate the DC voltage to be at a target value or within a defined range of a target value. The rate of change of the DC voltage will be influenced by the HVDC transmission conductors and where HVDC cables are used. The stray capacitance from the cables will exchange some energy with the system as the magnitude of DC voltage changes. However, such control can limit the amount of active power that can be rapidly exchanged between the energy island and the synchronous AC grid via the HVDC.

For example, a typical offshore-to-onshore wind farm may include multiple wind turbines connected as arrays to form the wind farm, and multiple array cables connected to an offshore point of connection (PoC), typically located on the same platform as the offshore HVDC converter. A transformer connects the PoC to the HVDC converter, optimizing AC voltage for the selected HVDC transmission voltage. HVDC cables connect the offshore HVDC platform to the onshore HVDC station. At the onshore station, the HVDC converter is connected to the AC grid at the onshore PoC via a transformer. However, as the onshore AC system transmission voltage is much higher than the offshore AC voltage, the auxiliary load supply at the onshore station is invariably taken from an auxiliary winding of the onshore HVDC transformer.

The operation of an offshore wind farm connected to an onshore AC grid via an HVDC connector can be understood by an analogy of a bucket of water with an infeed pipe and an outlet pipe. Electrical power from the wind farm may be subject to variation due to the nature of wind production, so the flow rate of the water flowing into the bucket varies. The bucket in the analogy represents the HVDC connection, and the HVDC link has a finite and relatively small energy storage capability, meaning that the bucket in the analogy has a small storage capacity. The level of water in the bucket may be considered equivalent to the magnitude of HVDC voltage of the link, which ideally should be maintained at a constant value. To maintain the level of water in the bucket, the water released through the outflow pipe must be regulated through the operation of a faucet; when the level of water in the bucket is maintained, the faucet is control in such a way that the water flowing into the bucket is maintained by the water flowing out of the bucket. In offshore-to-onshore wind, the HVDC interconnection regulates the power flow by assigning the onshore converter the function of maintaining the DC voltage at a target level or range. To maintain the DC voltage, the onshore converter must exchange an amount of power with the onshore AC system equivalent to the power flowing into the HVDC system at the offshore side. The outflow must be control so that the water flow is "instantaneously" regulated into the receiving system.

To overcome the above problem of sudden DC voltage change, the present disclosure proposes a "Fast Energy Controller" (FEC) controlling the energy resources within the energy island that have dispatchable stored energy and/or energy storage capability should take an input from the HVDC system which is a function of the measured DC voltage and that this said signal should be used to change the demand of the FEC system on the energy resources within the energy island.

In one or more embodiments, an HVDC converter operates in a grid-forming control mode, and generates a three-phase AC voltage at a defined frequency and magnitude at the PoC. Renewable energy sources (e.g., wind and solar) may operate to export active power they are generating into the AC system, and may adjust the phase angle of the voltage that they generate so that the voltage difference will be created with respect to a reference created by the offshore HVDC converter to achieve an active power flow from the sources to the HVDC converter. The energy flow changes the stored energy in the HVDC converter.

In existing systems for which the onshore converter does not provide synchronous grid-forming services to an associated AC grid, to maintain the desired energy level within the HVDC converter, the HVDC controller will dynamically adjust the DC voltage that it produces to modify the DC current flowing into the HVDC transmission line. A change in the DC current flowing in the DC link results in a change in energy within the onshore converter. To compensate for this change in energy, the onshore HVDC controller may adjust the phase angle of the synchronized three-phase AC voltage produced by the converter to restore the energy balance and DC voltage.

As an example of one or more embodiments herein, a sudden increase in demand for active power at the AC synchronous grid will result in the DC voltage of the HVDC link starting to fall. In the present disclosure, the falling DC voltage will trigger the FEC system to demand those elements of the energy island capable of providing a dispatched control output to provide more active power to the energy island AC grid. This additional active power will then flow into the HVDC converter connected to the energy island and so restore the DC voltage to its target value or range. Conversely, a sudden reduction in demand at the AC synchronous grid will result in the sudden increase in DC voltage on the HVDC link. The measured increase in DC voltage will trigger the FEC to reduce the active power being generated by the dispatchable resources within the energy island, again, restoring the DC voltage to a target value or to within a target range.

In one or more embodiments, the FEC may be an independent system or may be a sub-system of the overall Energy Management System (EMS) of the Energy Island.

In one or more embodiments, the FEC may either demand additional active power or reduce the power generation to regulate the DC voltage of the HVDC link. To extract power from different power sources (e.g., battery energy storage systems or FACTS with energy storage) especially when their power delivery capabilities differ, the FEC must be designed to efficiently combine and regulate the power.

In one or more embodiments, a configuration may include the HVDC converter connected to the AC grid and operating in a Vdc-Synchronous Grid Forming (SGFM) control mode while the energy island converter is operating in the grid forming control mode controlling the voltage and frequency of its own output.

In one or more embodiments, an HVDC transmission circuit is used to connect an energy island that is synchronously isolated from any other AC grid to a synchronous AC grid. This HVDC link will act to transfer the active power generated within the energy island to the synchronous AC grid in the steady-state. In the event of a sudden change in the power to be exchanged with the synchronous AC grid the DC voltage magnitude of the HVDC link will change. The response of the HVDC link to the change will include: Passing a measure of the DC voltage to the Fast Energy Controller (FEC), of the Energy Island, wherein: the Energy Island Fast Energy Controller will change the active power being demanded from the active energy storage resources under its control.

In one or more embodiments, the DC voltage measurement will be taken by the HVDC control system and passed to the FEC system via a fast communications link.

In one or more embodiments, the FEC will adjust the active power being generated by the renewable energy sources until the measured DC voltage is within a defined range.

In one or more embodiments, the HVDC converter connected to the synchronous AC grid will be in DC voltage control with synchronous grid forming.

In one or more embodiments, the HVDC converter connected to the energy island will be in V/f grid forming control.

An offshore HVDC converter in grid-forming control mode generates a three-phase AC voltage at a predefined frequency and with a defined magnitude at the PoC. Wind turbines export their active power generated to the AC system, and therefore adjust the phase angle of their generated voltage so that a voltage difference is created with respect to the reference created by the offshore HVDC converter to drive an active power flow into the HVDC from the wind turbine. The energy flow changes the stored energy in the HVDC converter valve capacitors, and therefore within the converter. To maintain the energy level within the offshore converter, a converter controller may dynamically adjust the DC voltage that it produces to modify the DC current that flows into the HVDC transmission circuit.

An onshore HVDC converter operating in grid-following mode may create a three-phase AC voltage synchronized with the onshore AC system while also controlling the DC-side voltage. To compensate for a change in energy caused by a change in DC current flowing in, a controller of the HVDC converter may adjust the phase angle of the synchronized three-phase AC voltage to drive the AC-side active power exchange and restore the energy balance and DC voltage of the HVDC link.

Technical benefits of the enhanced designs herein include a more rapid response to sudden changes in power demanded by power consumers from power suppliers, with less disturbance to the non-contributing energy generation (e.g., wind and solar generators). In addition, the FEC herein improves control over which energy generation sources are relied upon because the FEC may predetermine which energy generation source(s) from which to request additional energy in the event of a sudden change in energy demand. Rather than the AC grid detecting a need to increase or reduce power provided by an energy island, the voltage is measured via the HVDC link between the AC grid and the energy island, and the FEC causes the energy island to adjust its active power provided more quickly.

The above descriptions are for purposes of illustration and are not meant to be limiting. Numerous other examples, configurations, processes, etc., may exist, some of which are described in greater detail below. Example embodiments will now be described with reference to the accompanying figures.

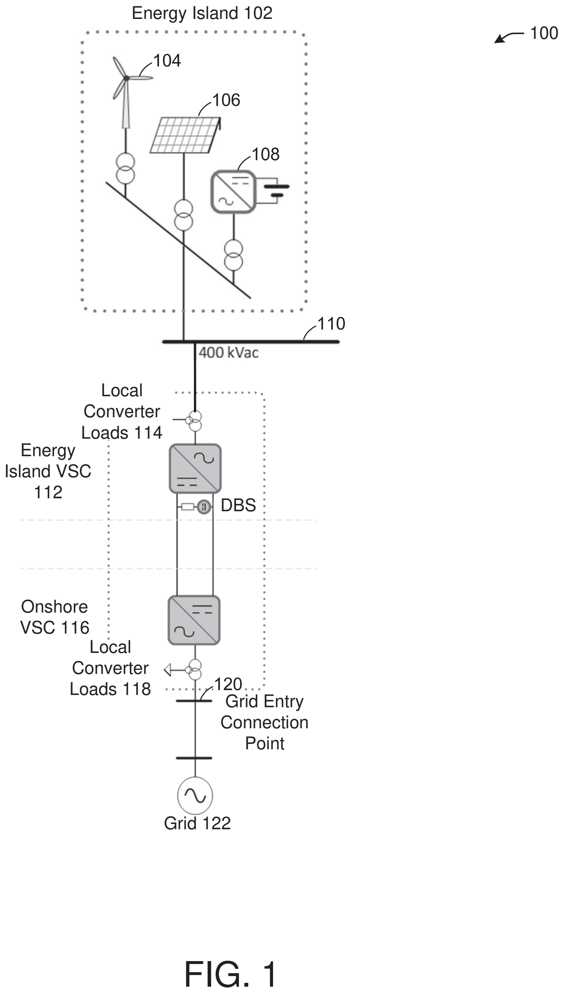

FIG. 1 shows an example system 100 for connecting an energy island to a synchronous alternating current (AC) grid via a high-voltage direct current (HDVC) in accordance with one embodiment of the present disclosure.

Referring to FIG. 1, the system 100 may include an energy island 102 with energy sources, including one or more wind turbines 104, one or more solar panels 106, and one or more batteries 108 for storing energy generated by the energy island 102. The energy island 102 may connect, via a busbar 110 (e.g., 400 kVac) to an energy island VSC 112 (voltage sourced converter), which may produce local converter loads 114 based on power supplied by the energy island 102. The offshore VSC 112 may connect to an onshore VSC 116, which may product local converter loads 118. The onshore VSC 116 may connect, via a grid entry connection point 120, to an AC grid 122 to supply energy from the energy island 102.

In the system 100, the energy island 102 includes multiple energy sources, as an example, wind turbines, solar panels and battery energy storage. Further, some or all of these renewable energy storage devices may be interfaced to the energy island 102 via power electronic converters and the power electronic converter may operate as a "grid following" controlled device. As a "grid following" controlled devices, the power converter does not contribute to creating the energy island AC grid 102 in terms of creating an AC voltage within a controlled range within a defined AC frequency range. To achieve the energy creation, at least some of the power electronic interfaced devices must operate in the "grid forming" mode, that is, they are able to "form" the grid 102, creating an AC voltage within a defined range within a defined range of AC frequency.

It is desirable to have the "grid forming" controller also operating at the synchronous AC grid 122 side of the HVDC link, that is, the side of the link that is delivering the power from the energy island 102 into the synchronous AC grid 122. The provision of a fast power response to a change in AC conditions at the connection point 120 through grid forming-based controllers may be implemented, but in the case shown in FIG. 1, a sudden change in the power to be exchanged between the HVDC converter and the synchronous AC grid 122 will result in a change in the DC voltage. In a conventional HVDC system, the change in DC voltage would be compensated for by one end of the HVDC link which is designated as being in "DC voltage controller", where the "DC voltage controller" will act to modify the active power that is being exchanged between the AC and DC system in order to regulate the DC voltage to be at a target value or within a defined range of a target value. The rate of change of the DC voltage will be influenced by the HVDC transmission conductors; where HVDC cables are used, the stray capacitance from the cables will exchange some energy with the system as the magnitude of DC voltage changes (e.g., the actual DC voltage demanded by the AC grid, a change in the DC voltage demanded by the AC grid, or a function of the DC voltage of the DC voltage demanded by the AC grid).

However, such control can limit the amount of dynamic active power that can be rapidly exchanged between the energy island 102 and the synchronous AC grid 122 via the HVDC. To overcome this, it is proposed herein that the FEC controls those energy resources within the energy island 102 that have dispatchable stored energy and/or energy storage capability should take an input from the HVDC system, which is a function of the measured DC voltage and that this said signal should be used to change the demand of the FEC system on the energy resources within the energy island 102.

As an example, a sudden increase in demand for active power at the AC synchronous grid 122 will result in the DC voltage of the HVDC link starting to fall. The falling DC voltage will trigger the FEC system to demand those elements of the energy island 102 capable of providing a dispatched control output to provide more active power to the energy island AC grid 102. This additional active power will then flow into the HVDC converter connected to the energy island 102 and so restore the DC voltage to its target value or range. Conversely a sudden reduction in demand at the AC synchronous grid 122 will result in the sudden increase in DC voltage on the HVDC link. The measured increase in DC voltage will trigger the FEC to reduce the active power being generated by the dispatchable resources within the energy island, again, restoring the DC voltage to a target value or to within a target range.

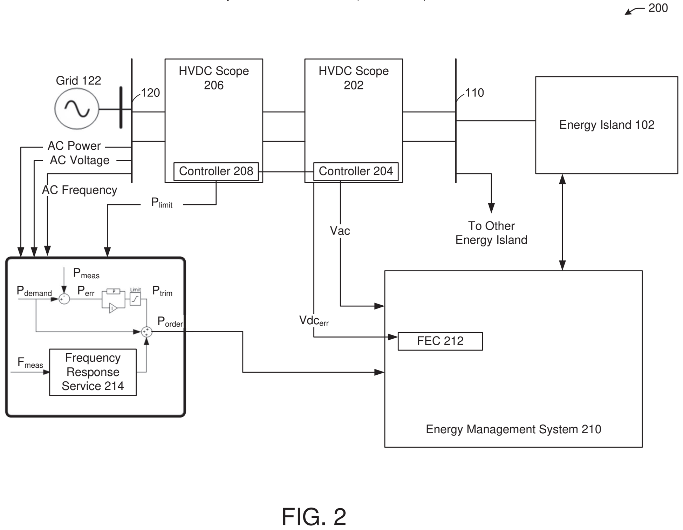

FIG. 2 shows a system 200 for how the DC voltage measurement from an HVDC system will be passed to an FEC in order to regulate the active power being generated in accordance with one embodiment of the present disclosure.

Referring to FIG. 2, the energy island 102 of FIG. 1 provides generated power to the grid 122 through the busbar 110, through an HVDC transmission circuit (e.g., including an HVDC scope 202 that includes a controller 204, and with an HVDC scope 206 that includes a controller 208), and through the grid entry connection point 120. The system 200 also includes an energy management system 210 with a FEC 212, and includes a frequency response service 214.

Still referring to FIG. 2, the AC power, AC voltage, and AC frequency from the grid entry connection point 120 may be used to determine a power order (P_{order}) based on a demanded power (P_{demand}) from the grid 122 and a measured power (Pₘₑₐₛ). The difference in the demanded power and the measured power is a power error (Pₑᵣᵣ), which may be limited to a trimmed power (Pₜᵣᵢₘ). A measured frequency (Fₘₑₐₛ) of the grid 122 may be input to the frequency response service 214, and based on the measured frequency and a difference between the demanded power the trimmed power, the power order is generated and provided to the energy management system 210.

Still referring to FIG. 2, the controller 208 provides a power limit (Pₗᵢₘᵢₜ) to the frequency response service 214. The controller 204 provides a three-phase AC voltage (Vac) and a DC voltage error (V_{DCerror}) to the energy management system (e.g., via one or more fast communications links, such as Fast Ethernet: 1 Gbit/s or greater). The FEC 212 compares the DC voltage error to a DC voltage range. When the DC voltage error is below a lower threshold of the DC voltage range, the energy management system 210 may increase active power generation from the energy island 102 to the grid 122 via the HVDC transmission system. When the DC voltage error is above an upper threshold of the DC voltage range, the energy management system 210 may decrease active power generation from the energy island 102 to the grid 122 via the HVDC transmission system. Specifically, the FEC 212 may connect to and communicate with any BESS (or other energy storage device) 108 to request a BESS 108 to increase or decrease an amount of electrical energy provided to the AC grid 122 via the HVDC transmission system.

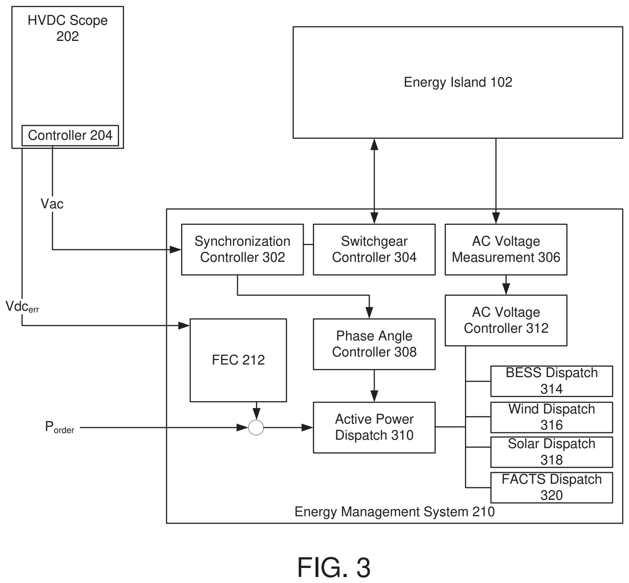

FIG. 3 shows an example of the energy management system 210 of FIG. 2 in accordance with one embodiment of the present disclosure.

Referring to FIG. 3, the energy management system 210 may include the FEC 212, a synchronization controller 302, a switchgear controller 304, an AC voltage measurement 306, a phase angle controller 308, an active power dispatch 310, an AC voltage controller 312, a battery energy storage system (BESS) dispatch 314, a wind generation dispatch 316, a solar generation dispatch 318, and a flexible alternating current transmission system (FACTS) dispatch 320.

Still referring to FIG. 3, the power order may be input to the active power dispatch 310. The three-phase AC voltage may be input to the synchronization controller 302. The DC voltage error may be input to the FEC 212. The AC voltage measurement 306 may be provided to the AC voltage controller 312. The BESS dispatch 314, the wind generation dispatch 316, the solar generation dispatch 318, and the FACTS dispatch 320 may be used to control (e.g., increase or decrease) respective power generation output by respective energy sources of the energy island 102 based on whether the DC voltage error is above or below the DC voltage range. When the DC voltage error is within the DC voltage range, the existing output from the energy island may be left alone by the FEC 212. Active power dispatch within the energy management system 210 will still impact the active power being generated, but at a slower rate.

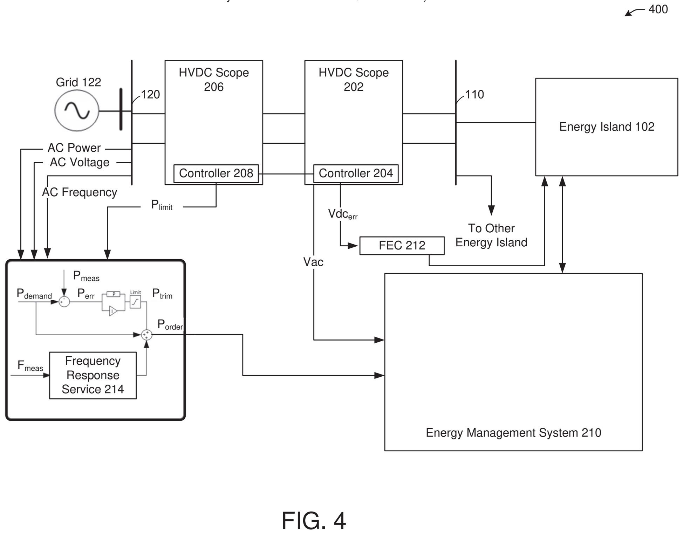

FIG. 4 shows a system 400 for how the DC voltage measurement from an HVDC system will be passed to the FEC 212 as a separate controller in order to regulate the active power being generated in accordance with one embodiment of the present disclosure.

Referring to FIG. 4, the system 400 includes the components of the system 200 of FIG. 2, but the FEC 212 is a separate controller (e.g., separate with respect to the energy management system 210). In FIG. 4, because the FEC 212 is outside of the energy management system 210, the DC voltage error is provided to the FEC 212, but not to the energy management system 210, and the FEC 212 controls active energy output of the energy generation sources of the energy island 102 of FIG. 1 from outside of the energy management system 210.

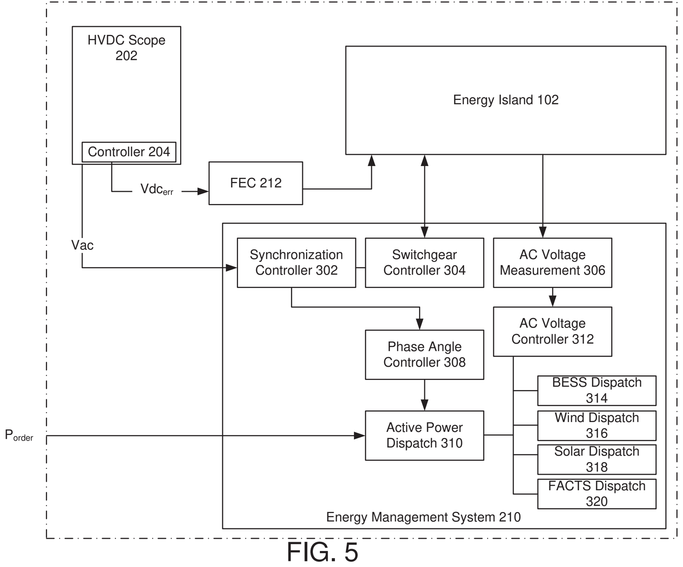

FIG. 5 shows an example of the energy management system 210 of FIG. 4 in accordance with one embodiment of the present disclosure.

Referring to FIG. 5, the DC voltage error is provided to the FEC 212, which is outside of the energy management system 210. As a result, the power order is provided to the active power dispatch 310 without comparison to the DC voltage error. Except for the FEC 212, the energy management system 210 in FIG. 5 includes the same components and otherwise provides the same functionality as in FIG. 3.

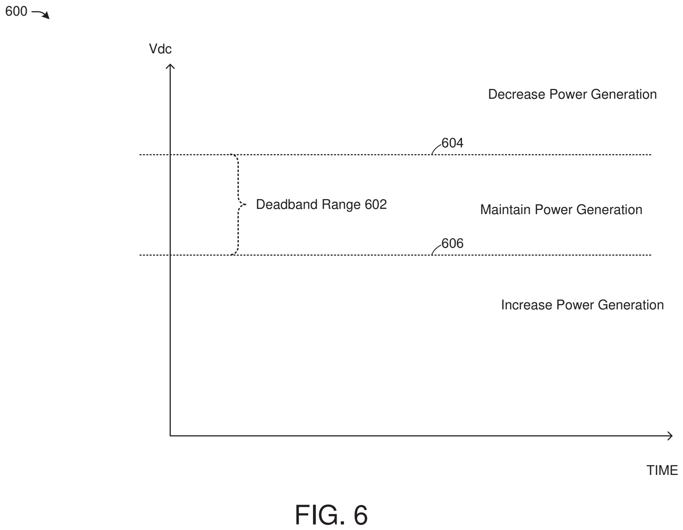

FIG. 6 shows an example graph 600 of the DC voltage error used by the FEC 212 of FIG. 2 and FIG. 4 to determine whether to change active power generation levels of the energy island 102 of FIG. 1 in accordance with one embodiment of the present disclosure.

Referring to FIG. 6, when the DC voltage error between the active DC voltage provided by the energy island 102 HVDC converter of FIG. 1 and the voltage demanded by the HVDC converter of the grid 122 is within a deadband range 602 defined by an upper DC voltage threshold 604 and a lower DC voltage threshold 606, the FEC 212 may maintain (e.g., not request any changes to) the active power output by the energy island 102 energy sources. When the DC voltage error is above the upper DC voltage threshold 604, the FEC 212 may send one or more commands to the energy sources of the energy island 102 to decrease active power generation. When the DC voltage error is below the lower DC voltage threshold 606, the FEC 212 may send one or more commands to the energy sources of the energy island 102 to increase active power generation. As a result, when a sudden DC voltage change is detected and is significant enough to cause the DC voltage error to be outside of the deadband range 602, the FEC 212 may cause a near real-time response by controlling specific energy sources of the energy island 102 to increase or decrease energy generation to prevent too much or too little energy being provided to the grid 122.

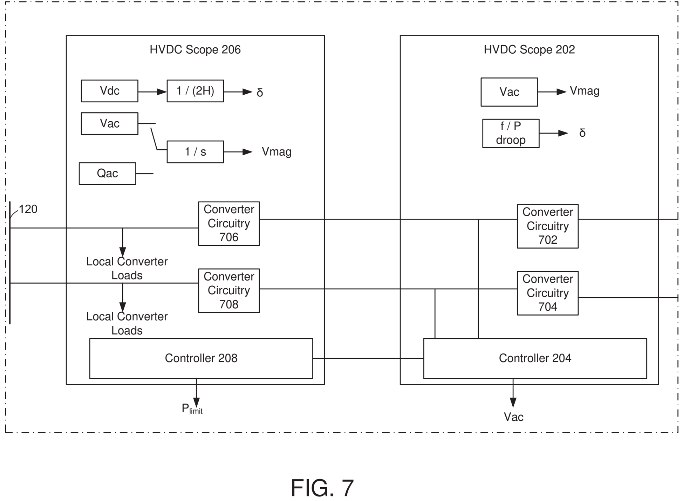

FIG. 7 shows an example of the HVDC transmission circuit of FIG. 2 and FIG. 4 in accordance with one embodiment of the present disclosure.

The HVDC scope 202 may include converter circuitry 702 and 704, each of which may provide respective local converter loads. The HVDC scope 206 may include converter circuitry 706 and 708, each of which may provide respective local converter loads. The HVDC scope 202 may determine a delta based on an f/P droop, and may determine a magnitude voltage based on a Vac droop. The HVDC scope 206 may use the DC voltage to determine a delta using 1/2H (inductance), and may have a switch between 1/s and AC voltage and AC charge (Q) to determine a voltage magnitude.

Referring to any of the above figures, the FEC, the energy island, the HVDC transmission circuits, and/or the energy management system may include memory coupled to processing circuitry capable of executing instructions that cause the processing circuitry to perform the actions/functions described herein to control the active power provided by an energy island.

The term "circuitry" at least in some examples refers to a circuit or system of multiple circuits configured to perform a particular function in an electronic device. The circuit or system of circuits may be part of, or include one or more hardware components, such as a logic circuit, a processor (shared, dedicated, or group) and/or memory (shared, dedicated, or group), an application-specific integrated circuit (ASIC), field-programmable gate array (FPGA), programmable logic controller (PLC), single-board computer (SBC), system on chip (SoC), system in package (SiP), multi-chip package (MCP), digital signal processor (DSP), and the like, that are configured to provide the described functionality. In addition, the term "circuitry" may also refer to a combination of one or more hardware elements with the program code used to carry out the functionality of that program code. Some types of circuitry may execute one or more software or firmware programs to provide at least some of the described functionality. Such a combination of hardware elements and program code may be referred to as a particular type of circuitry.

The term "processor circuitry" at least in some examples refers to, is part of, or includes circuitry capable of sequentially and automatically carrying out a sequence of arithmetic or logical operations, or recording, storing, and/or transferring digital data. The term "processor circuitry" at least in some examples refers to one or more application processors, one or more baseband processors, a physical CPU, a single-core processor, a dual-core processor, a triple-core processor, a quad-core processor, and/or any other device capable of executing or otherwise operating computer-executable instructions, such as program code, software modules, and/or functional processes. The terms "application circuitry" and/or "baseband circuitry" may be considered synonymous to, and may be referred to as, "processor circuitry."

The term "memory" and/or "memory circuitry" at least in some examples refers to one or more hardware devices for storing data, including random access memory (RAM), static RAM (SRAM), dynamic RAM (DRAM), synchronous DRAM (SDRAM), magnetoresistive RAM (MRAM), conductive bridge Random Access Memory (CB-RAM), spin transfer torque (STT)-MRAM, phase change RAM (PRAM), core memory, read-only memory (ROM), programmable ROM (PROM), erasable PROM (EPROM), electrically EPROM (EEPROM), flash memory, non-volatile RAM (NVRAM), magnetic disk storage mediums, optical storage mediums, flash memory devices or other machine readable mediums for storing data. The term "computer-readable medium" includes, but is not limited to, memory, portable or fixed storage devices, optical storage devices, and various other mediums capable of storing, containing or carrying instructions or data.

The term "interface circuitry" at least in some examples refers to, is part of, or includes circuitry that enables the exchange of information between two or more components or devices. The term "interface circuitry" at least in some examples refers to one or more hardware interfaces, for example, buses, I/O interfaces, peripheral component interfaces, network interface cards, and/or the like.

The term "computer system" at least in some examples refers to any type interconnected electronic devices, computer devices, or components thereof. Additionally, the terms "computer system" and/or "system" at least in some examples refer to various components of a computer that are communicatively coupled with one another. Furthermore, the term "computer system" and/or "system" at least in some examples refer to multiple computer devices and/or multiple computing systems that are communicatively coupled with one another and configured to share computing and/or networking resources.

The term "server" at least in some examples refers to a computing device or system, including processing hardware and/or process space(s), an associated storage medium such as a memory device or database, and, in some instances, suitable application(s) as is known in the art. The terms "server system" and "server" may be used interchangeably herein, and these terms at least in some examples refers to one or more computing system(s) that provide access to a pool of physical and/or virtual resources. The various servers discussed herein include computer devices with rack computing architecture component(s), tower computing architecture component(s), blade computing architecture component(s), and/or the like. The servers may represent a cluster of servers, a server farm, a cloud computing service, or other grouping or pool of servers, which may be located in one or more datacenters. The servers may also be connected to, or otherwise associated with, one or more data storage devices (not shown). Moreover, the servers include an operating system (OS) that provides executable program instructions for the general administration and operation of the individual server computer devices, and includes a computer-readable medium storing instructions that, when executed by a processor of the servers, may allow the servers to perform their intended functions. Suitable implementations for the OS and general functionality of servers are known or commercially available, and are readily implemented by persons having ordinary skill in the art.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure.

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Further aspects of the invention are provided by the subject matter of the following clauses:
1. A system for connecting an energy island to an alternating current (AC) grid, the system comprising: a high-voltage direct current (HVDC) transmission circuit connecting an energy island, comprising energy island resources, wherein the energy island resources comprise one or more energy storage systems and at least one of one or more wind turbines and one or more solar panels, to a synchronous AC grid; and a fast energy controller (FEC), remote from the HVDC transmission circuit, and configured to: receive, from the HVDC transmission circuit, an indication of a change in electrical energy being delivered to the synchronous AC grid from the energy island resources; determine a difference between a power being delivered to the synchronous AC grid via the HVDC transmission circuit and the electrical energy; and based on a comparison of the difference to a deadband range with an upper threshold and a lower threshold, cause the energy island to adjust an amount of active energy provided by the one or more energy storage systems to the HVDC transmission circuit to bring the measured difference back within the deadband range.
2. The system of any preceding clause, further comprising an energy management system remote from the HVDC transmission circuit and the energy island, the energy management system comprising the FEC.
3. The system of any preceding clause, further comprising an energy management system remote from the HVDC transmission circuit and the energy island, wherein the FEC is remote from the energy management system.
4. The system of any preceding clause, wherein the HVDC transmission circuit is configured to: measure a change in stored electrical energy; and transmit the indication of the stored electrical energy to the FEC via a fast communications link.
5. The system of any preceding clause, wherein the FEC is further configured to: receive, from the HVDC transmission circuit, a second indication of a second electrical energy delivered to the synchronous AC grid; and determine not to cause the energy island to adjust the amount of active energy based on a second difference between a second power demanded by the synchronous AC grid and the second electrical energy being within the deadband range.
6. The system of any preceding clause, wherein the HVDC transmission circuit comprises an HVDC converter connected to the synchronous AC grid, and wherein the HVDC converter is a synchronous grid-forming HVDC transmission circuit.
7. The system of any preceding clause, wherein the HVDC transmission circuit comprises an HVDC converter connected to the energy island, and wherein the HVDC converter is a voltage/frequency (V/F) grid-forming HVDC transmission circuit.
8. The system of any preceding clause, wherein to cause the energy island to adjust the amount of active energy provided to the synchronous AC grid comprises to cause the energy island to increase the active energy provided based on the difference being below the lower threshold.
9. The system of any preceding clause, wherein to cause the energy island to adjust the amount of active energy provided to the synchronous AC grid comprises to cause the energy island to decrease the active energy provided based on the difference being above the upper threshold.
10. A fast energy controller (FEC) device for controlling active energy provided by an energy island to a synchronous alternating current (AC) grid via a high-voltage direct current (HVDC) transmission circuit, the FEC device comprising processing circuitry configured to: receive, from the HVDC transmission circuit, an indication of a change in electrical energy being delivered to the synchronous AC grid by energy island resources comprising one or more energy storage systems and at least one of one or more wind turbines and one or more solar panels; determine a difference between a power being delivered to the synchronous AC grid via the HVDC transmission circuit and the electrical energy; and based on a comparison of the difference to a deadband range with an upper threshold and a lower threshold, cause the energy island to adjust an amount of active energy provided by the one or more energy storage systems to the HVDC transmission circuit to bring the measured difference back within the deadband range.
11. The FEC device of any preceding clause, wherein the FEC controller is included within an energy management system remote from the energy island and the HVDC transmission circuit.
12. The FEC device of any preceding clause, wherein the FEC device is remote from an energy management system that is remote from the HVDC transmission circuit and the energy island.
13. The FEC device of any preceding clause, wherein the processing circuitry is further configured to: receive, from the HVDC transmission circuit, a second indication of a second electrical energy being delivered to the synchronous AC grid; and determine not to cause the energy island to adjust the amount of active energy based on a second difference between a second power being delivered to the synchronous AC grid and the second electrical energy being within the deadband range.
14. The FEC device of any preceding clause, wherein to cause the energy island to adjust the amount of active energy provided to the synchronous AC grid comprises to cause the energy island to increase the active energy provided based on the difference being below the lower threshold.
15. The FEC device of any preceding clause, wherein to cause the energy island to adjust the amount of active energy provided to the synchronous AC grid comprises to cause the energy island to decrease the active energy provided based on the difference being above the upper threshold.
16. A method for controlling active energy provided by an energy island to an synchronous alternating current (AC) grid via a high-voltage direct current (HVDC) transmission circuit, the method comprising: receiving, by processing circuitry of a fast energy controller, from the HVDC transmission circuit, an indication of an electrical energy being delivered to the AC grid by energy island resources comprising one or more energy storage systems and at least one of one or more wind turbines and one or more solar panels; determining, by the processing circuitry, a difference between a power being delivered to the synchronous AC grid via the HVDC transmission circuit and the electrical energy; and based on a comparison of the difference to a deadband range with an upper threshold and a lower threshold, causing, by the processing circuitry, the energy island to adjust an amount of active energy provided by the one or more energy storage systems to the HVDC transmission circuit to bring the measured difference back within the deadband.
17. The method of any preceding clause, further comprising: receiving, by the processing circuitry, from the HVDC transmission circuit, a second indication of a second electrical energy demanded from the AC grid; and determining, by the processing circuitry, not to cause the energy island to adjust the amount of active energy based on a second difference between a second power demanded by the synchronous AC grid and the second electrical energy being within the deadband range.
18. The method of any preceding clause, wherein causing the energy island to adjust the amount of active energy provided to the synchronous AC grid comprises causing the energy island to increase the active energy provided based on the difference being below the lower threshold.
19. The method of any preceding clause, wherein causing the energy island to adjust the amount of active energy provided to the synchronous AC grid comprises causing the energy island to decrease the active energy provided based on the difference being above the upper threshold.
20. The method of any preceding clause, wherein the HVDC transmission circuit comprises a first HVDC converter connected to the synchronous AC grid, wherein the first HVDC converter is a synchronous grid-forming HVDC transmission circuit, wherein the HVDC transmission circuit comprises a second HVDC converter connected to the energy island, and wherein the second HVDC converter is a voltage/frequency (V/F) grid-forming HVDC transmission circuit.

## Claims

1. A system for connecting an energy island to an alternating current (AC) grid, the system comprising:
a high-voltage direct current (HVDC) transmission circuit connecting an energy island, comprising energy island resources, wherein the energy island resources comprise one or more energy storage systems and at least one of one or more wind turbines and one or more solar panels, to a synchronous AC grid; and
a fast energy controller (FEC), remote from the HVDC transmission circuit, and configured to:
receive, from the HVDC transmission circuit, an indication of a change in electrical energy being delivered to the synchronous AC grid from the energy island resources;
determine a difference between a power being delivered to the synchronous AC grid via the HVDC transmission circuit and the electrical energy; and
based on a comparison of the difference to a deadband range with an upper threshold and a lower threshold, cause the energy island to adjust an amount of active energy provided by the one or more energy storage systems to the HVDC transmission circuit to bring the measured difference back within the deadband range.

2. The system of claim 1, further comprising an energy management system remote from the HVDC transmission circuit and the energy island, the energy management system comprising the FEC.

3. The system of claim 1, further comprising an energy management system remote from the HVDC transmission circuit and the energy island, wherein the FEC is remote from the energy management system.

4. The system of any preceding claim, wherein the HVDC transmission circuit is configured to:
measure a change in stored electrical energy; and
transmit the indication of the stored electrical energy to the FEC via a fast communications link.

5. The system of any preceding claim, wherein the FEC is further configured to:
receive, from the HVDC transmission circuit, a second indication of a second electrical energy delivered to the synchronous AC grid; and
determine not to cause the energy island to adjust the amount of active energy based on a second difference between a second power demanded by the synchronous AC grid and the second electrical energy being within the deadband range.

6. The system of any preceding claim, wherein the HVDC transmission circuit comprises an HVDC converter connected to the synchronous AC grid, and wherein the HVDC converter is a synchronous grid-forming HVDC transmission circuit.

7. The system of any preceding claim, wherein the HVDC transmission circuit comprises an HVDC converter connected to the energy island, and wherein the HVDC converter is a voltage/frequency (V/F) grid-forming HVDC transmission circuit.

8. The system of any preceding claim, wherein to cause the energy island to adjust the amount of active energy provided to the synchronous AC grid comprises to cause the energy island to increase the active energy provided based on the difference being below the lower threshold.

9. The system of any of claims 1-7, wherein to cause the energy island to adjust the amount of active energy provided to the synchronous AC grid comprises to cause the energy island to decrease the active energy provided based on the difference being above the upper threshold.

10. A fast energy controller (FEC) device for controlling active energy provided by an energy island to an synchronous alternating current (AC) grid via a high-voltage direct current (HVDC) transmission circuit, the FEC device comprising processing circuitry configured to:
receive, from the HVDC transmission circuit, an indication of a change in electrical energy being delivered to the synchronous AC grid by energy island resources comprising one or more energy storage systems and at least one of one or more wind turbines and one or more solar panels;
determine a difference between a power being delivered to the synchronous AC grid via the HVDC transmission circuit and the electrical energy; and
based on a comparison of the difference to a deadband range with an upper threshold and a lower threshold, cause the energy island to adjust an amount of active energy provided by the one or more energy storage systems to the HVDC transmission circuit to bring the measured difference back within the deadband range.

11. The FEC device of claim 10, wherein
the FEC controller is included within an energy management system remote from the energy island and the HVDC transmission circuit; or
the FEC device is remote from an energy management system that is remote from the HVDC transmission circuit and the energy island.

12. The FEC device of claim 10 or 11, wherein the processing circuitry is further configured to:
receive, from the HVDC transmission circuit, a second indication of a second electrical energy being delivered to the synchronous AC grid; and
determine not to cause the energy island to adjust the amount of active energy based on a second difference between a second power being delivered to the synchronous AC grid and the second electrical energy being within the deadband range.

13. The FEC device of any of claims 10-12, wherein to cause the energy island to adjust the amount of active energy provided to the synchronous AC grid comprises to cause the energy island to increase the active energy provided based on the difference being below the lower threshold.

14. The FEC device of any of claims 10-12, wherein to cause the energy island to adjust the amount of active energy provided to the synchronous AC grid comprises to cause the energy island to decrease the active energy provided based on the difference being above the upper threshold.

15. A method for controlling active energy provided by an energy island to an synchronous alternating current (AC) grid via a high-voltage direct current (HVDC) transmission circuit, the method comprising:
receiving, by processing circuitry of a fast energy controller, from the HVDC transmission circuit, an indication of an electrical energy being delivered to the AC grid by energy island resources comprising one or more energy storage systems and at least one of one or more wind turbines and one or more solar panels;
determining, by the processing circuitry, a difference between a power being delivered to the synchronous AC grid via the HVDC transmission circuit and the electrical energy; and
based on a comparison of the difference to a deadband range with an upper threshold and a lower threshold, causing, by the processing circuitry, the energy island to adjust an amount of active energy provided by the one or more energy storage systems to the HVDC transmission circuit to bring the measured difference back within the deadband.
